# EUROPÄISCHE PATENTSCHRIFT

(11) **EP 3 485 564 B1**
(45) Veröffentlichungstag und Bekanntmachung des Hinweises auf die Patenterteilung: **26.06.2024**
(21) Anmeldenummer: 16754485.7
(22) Anmeldetag: 18.08.2016
(51) Int. Cl.: H02M 7/483, H02M 1/40, H02M 7/48, H02J 3/18, H02J 3/26

(54) **VERFAHREN ZUM BETRIEB EINES MEHRPHASIGEN MEHRSTUFENUMRICHTERS**
METHOD FOR OPERATING A MULTI-PHASE MULTI-STAGE CONVERTER
PROCÉDÉ PERMETTANT DE FAIRE FONCTIONNER UN CONVERTISSEUR MULTI-ÉTAGES POLYPHASÉ

(43) Veröffentlichungstag der Anmeldung: 22.05.2019
(73) Patentinhaber: Siemens Energy Global GmbH & Co. KG, 81739 München (DE)
(72) Erfinder: ANTES, Andreas, 91358 Kunreuth (DE); LEHMANN, Markus, 91056 Erlangen (DE); NIEMANN, Bernd, 91054 Erlangen (DE); PIESCHEL, Martin, 90473 Nürnberg (DE)
(86) Internationale Anmeldenummer: PCT/EP2016/069573
(87) Internationale Veröffentlichungsnummer: WO 2018/033204

(56) Entgegenhaltungen:
- JP-A- 2014 233 126
- JP-A- 2016 100 926
- US-A- 5 383 107
- US-A1- 2010 067 266
- US-A1- 2013 070 495
- US-B1- 6 282 104
- POU JOSEP ET AL: "Circulating Current Injection Methods Based on Instantaneous Information for the Modular Multilevel Converter", IEEE TRANSACTIONS ON INDUSTRIAL ELECTRONICS, IEEE SERVICE CENTER, PISCATAWAY, NJ, USA, vol. 62, no. 2, 1 February 2015 (2015-02-01), pages 777-788, XP011569179, ISSN: 0278-0046, DOI: 10.1109/TIE.2014.2336608 [retrieved on 2015-01-07]

## Beschreibung

Die Erfindung betrifft ein Verfahren zum Betrieb eines mehrphasigen Mehrstufenumrichters, der über einen Transformator an ein dreiphasiges elektrisches Energieversorgungsnetz angeschlossen ist und mehrere Phasenmodule aufweist, gemäß dem Oberbegriff des Anspruchs 1. Insbesondere betrifft die Erfindung den Schutz vor einer Sättigung des Transformators.

Mehrphasige modulare Mehrstufenumrichter sind bekannt und weisen mehrere Phasenmodule auf, die jeweils aus einer Vielzahl von elektrisch in Reihe geschalteten zweipoligen Sub-Modulen gebildet sind. Die Sub-Modulen weisen wiederum jeweils ein Powermodul mit mehreren Halbleiterschaltern und einen Energiespeicher auf, an dem jeweils eine Zwischenkreisspannung anliegt.

Aus der Schrift US 2013/0070495 A1 ist ein AC-DC-Umrichter bekannt, bei dem eine Vielzahl von Sub-Modulen elektrisch in Reihe geschaltet sind und ein Phasenmodul bilden. Jedes Phasenmodul ist über einen DC-Blockier-Kondensator und einen Transformator mit einem Wechselspannungsnetz verbunden. Die über dem DC-Blockier-Kondensator auftretende Spannung wird gemessen und als Eingangsgröße für eine Regelung verwendet.

Aus der Patentanmeldung US 2010/0067266 A1 ist ein Verfahren zum Umrichten von elektrischem Strom mittels eines Umrichters bekannt. Zwischen einem Gleichspannungsanschluss und einem Wechselspannungsanschluss ist ein Phasenmodulzweig ausgebildet, der eine Reihenschaltung aus Submodulen aufweist. Eine Stromregeleinheit wird mit Istwerten und mit Sollwerten versorgt, wobei die Istwerte Zweigenergie-Istwerte umfassen. Die Zweigenergie-Istwerte werden dabei durch Aufsummieren von in den Submodulen erfassten Submodul-Istwerten gebildet.

Die Schrift "Circulating Current Injection Methods Based on Instantaneous Information for the Modular Multilevel Converter" von J. Pou et al, IEEE Transactions on Industrial Electronics, Bd. 62, Nr. 2, 1. Februar 2015, Seiten 777-788, offenbart ein Regelung, bei der Zwischenkreisspannungen von Sub-Modulen eines Mehrstufenumrichters als Eingangsgröße verwendet werden und daraus die Amplitude der Grundschwingung eines Kreisstroms ermittelt wird.

Mehrstufenumrichter können beliebige Umrichterströme erzeugen, indem die Phasenmodulströme geregelt werden. Kommt es bei der Istwert-Erfassung der Phasenmodulströme, z.B. durch Offset- oder Skalierungsfehler, zu einer Abweichung, so entstehen Gleichstromanteile (Gleichstromabgaben), welche in den Transformator zum Anschluss des modularen Mehrstufenumrichters in das Energieversorgungsnetz fließen. Es ist bekannt, dass entsprechende Gleichstromabgaben den Transformator in die Sättigung bringen, was zu zusätzlichen Verlusten führt und insbesondere mit Überhitzung und starker Lärmentwicklung des Transformators verbunden ist. Die Überhitzung kann sogar zu einer Zerstörung des Transformators durch einen Brand führen. Die Lärmentwicklung erfordert zusätzliche Schallschutzmaßnahmen, welche sich wiederum nachteilig auf die Erwärmung auswirkt und zudem noch teuer ist.

Es ist bekannt, dass Gleichstromabgaben entweder durch eine höhere Messgenauigkeit verringert werden können, wobei entsprechende Sensoriken für Mittel- und Hochspannungstechnik sehr teuer sind, oder durch eine Sättigungskompensation im Transformator. Die Sättigungskompensation ist jedoch sehr aufwändig und stellt eine potenzielle Fehlerquelle dar, welche die hohe Verfügbarkeit eines Transformators deutlich senkt.

Die Aufgabe der Erfindung ist es, eine Sättigung des Transformators bei Verwendung eines Mehrstufenumrichters zu verhindern oder zumindest deutlich zu verringern.

Die Aufgabe wird durch die Merkmale des Anspruchs 1 gelöst; die Unteransprüche stellen vorteilhafte Ausgestaltungen dar.

Die Lösung sieht vor, dass für jedes Phasenmodul a) die Zwischenkreisspannungen der Sub-Module gemessen werden, b) die Amplituden des netzfrequenten Wechselanteils der Zwischenkreisspannungen der Sub-Module ermittelt werden und c) anhand der Amplituden der netzfrequenten Wechselanteile und der zu dem Phasenmodul gehörigen Phasenmodulspannung die Gleichstromabgabe des Phasenmoduls ermittelt wird. Anhand der ermittelten Gleichstromabgaben der Phasenmodule werden die zugehörigen Sollströme derart korrigiert bzw. geändert, dass die Gleichstromabgaben für alle Phasenmodule auf das gleiche Stromniveau ausgeregelt werden, so dass sie das gleiche Stromniveau aufweisen. Ein Spezialfall für das gleiche Stromniveau ist das Nullniveau, bei dem alle Gleichstromabgaben (Gleichströme) Null sind, also keine Gleichstromabgabe vorhanden ist. Erfindungsgemäß werden die Gleichstromanteile in den Phasenmodulen (quasi den Umrichterzweigen) anhand der Spannungsripples der Zwischenkreisspannungen ermittelt und nivelliert, so dass keine Gleichstromanteil-Differenz in den Transformator fließen kann. Überraschenderweise hat sich nämlich gezeigt, dass der netzfrequente Wechselanteil in den Zwischenkreisspannungen, also den Sub-Modul-Spannungen, abhängig von dem abgegebenen Gleichstrom (der Gleichstromabgabe) und der Phasenmodulspannung (der Anschlussspannung des Phasenmoduls) ist. Durch eine genaue Berechnung der Wechselanteilamplitude durch einen Effektivwertbildner oder einen Hüllkurvendetektor wird die Abweichung in der Gleichstromabgabe ermittelt und dann über eine entsprechende Gleichstromanforderung (des Stromreglers) für das betreffende Phasenmodul (den betreffenden Umrichterzweig) ausgeglichen.

Zweckmäßigerweise wird für jedes Phasenmodul a) der Phasenmodulstrom gemessen, b) der Sollstrom anhand eines vorgegebenen Wirkleistungs- oder Blindleistungssollwerts ermittelt, c) der ausgegebene Sollstrom mit dem gemessenen Phasenmodulstrom verglichen und d) eine Stellspannung anhand der Differenz, die dem (dazwischen liegt der Stromregler) Regelfehler entspricht, (vom Stromregler) berechnet und (für das Phasenmodul) ausgegeben wird.

Mit Vorteil werden für jedes Phasenmodul anhand der Stellspannung eine Pulsmusterspannung erzeugt und anhand der Pulsmusterspannung Schaltbefehle für die einzelnen Sub-Module generiert.

Die Erfindung wird nachfolgend anhand eines Ausführungsbeispiels näher beschrieben. Es zeigen:
- Fig. 1: eine Anordnung 1 mit einem modularen Mehrstufenumrichter,
- Fig. 2: einen Mehrstufenumrichter,
- Fig. 3: einen Mehrstufenumrichter mit sechs Phasenmodulen,
- Fig. 4: einen Mehrstufenumrichter mit drei Phasenmodulen in Sternschaltung,
- Fig. 5: ein einzelnes Phasenmodul,
- Fig. 6: das Phasenmodul gemäß Fig. 5 mit seinen Sub-Modulen,
- Fig. 7: ein Sub-Modul,
- Fig. 8: eine Leistungshalbleiterschaltung als Vollbrückenschaltung,
- Fig. 9: eine Leistungshalbleiterschaltung als Halbbrückenschaltung,
- Fig. 10: ein Kondensatormodul eines Sub-Moduls,
- Fig. 11: eine Ansteuereinheit eines Mehrstufenumrichters,
- Fig. 12: eine erste Ausführung einer Gleichstromabgabe-Ermittlung,
- Fig. 13: eine zweite Ausführung einer Gleichstromabgabe-Ermittlung,
- Fig. 14: eine Ausführung eines Amplitudenfilters der Gleichstromabgabe-Ermittlung gemäß Fig. 12,
- Fig. 15: ein Amplitudenfilter für die netzfrequente Fourieramplitude der Phasenmodulspannung,
- Fig. 16: eine Ausführung einer Sollwertgenerierung,
- Fig. 17: eine erste Ausführung einer Stromkorrektur,
- Fig. 18: eine zweite Ausführung einer Stromkorrektur und
- Fig. 19: ein Ablaufdiagramm des Verfahrens zum Betrieb des Mehrstufenumrichters.

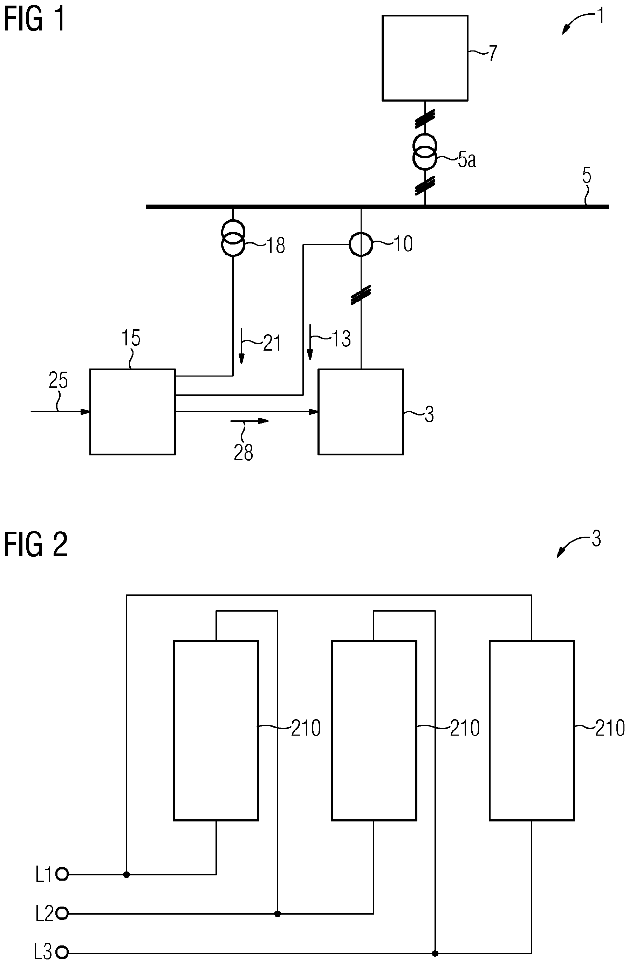

In Fig. 1 ist eine Anordnung 1 mit einem modularen Mehrstufenumrichter 3 (modularen Multi-Level-Umrichter) dargestellt. Der modulare Mehrstufenumrichter 3 ist dreiphasig über eine Anschlussschiene 5 und einen Transformator 5a mit einem Energieversorgungsnetz 7 elektrisch verbunden. Das Energieversorgungsnetz 7 ist im Ausführungsbeispiel ein dreiphasiges Wechselspannungs-Energieversorgungsnetz 7. Mittels eines Stromsensors 10 wird der durch den Umrichter 3 fließende Strom gemessen. Strommesswerte 13 werden zu einer Ansteuereinheit 15 für den modularen Mehrstufenumrichter 3 übertragen. Weiterhin wird mittels eines Spannungssensors 18 (der hier als ein Messwandler ausgeführt ist) die an der Anschlussschiene 5 anliegende Spannung gemessen. Diese Spannung entspricht im Wesentlichen der an dem modularen Mehrstufenumrichter anliegenden Spannung. Die Spannungsmesswerte der Anschlussspannung 21 werden zu der Ansteuereinheit 15 übertragen.

Anhand von vorgegebenen Sollwerten 25 (Wirkleistungs- oder Blindleistungssollwerte) berechnet die Ansteuereinheit 15 Ansteuersignale 28, die zu dem modularen Mehrstufenumrichter 3 übertragen werden. Mittels dieser Ansteuersignale 28 wird der Mehrstufenumrichter 3 derart angesteuert, dass sich an der Anschlussschiene 5 die gewünschten Strom- und Spannungswerte einstellen. Die Ansteuereinheit 15 kontrolliert auf diese Weise den Mehrstufenumrichter 3.

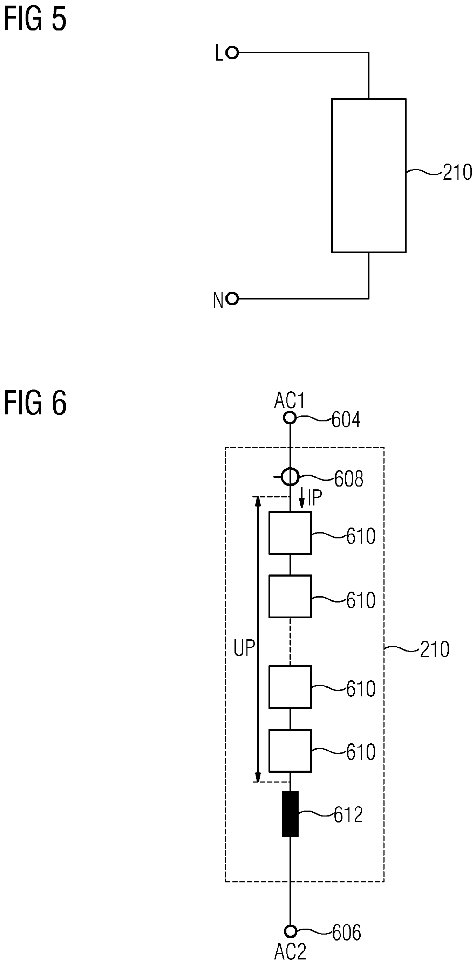

In Fig. 2 ist ein Ausführungsbeispiel eines Mehrstufenumrichters 3 dargestellt, welcher drei Phasenmodule 210 aufweist. Die drei Phasenmodule 210 sind in Dreiecksschaltung geschaltet und mit drei Phasen L1, L2 und L3 des Energieversorgungsnetzes 7 verbunden. Der Aufbau der Phasenmodule 210 ist in Fig. 6 dargestellt.

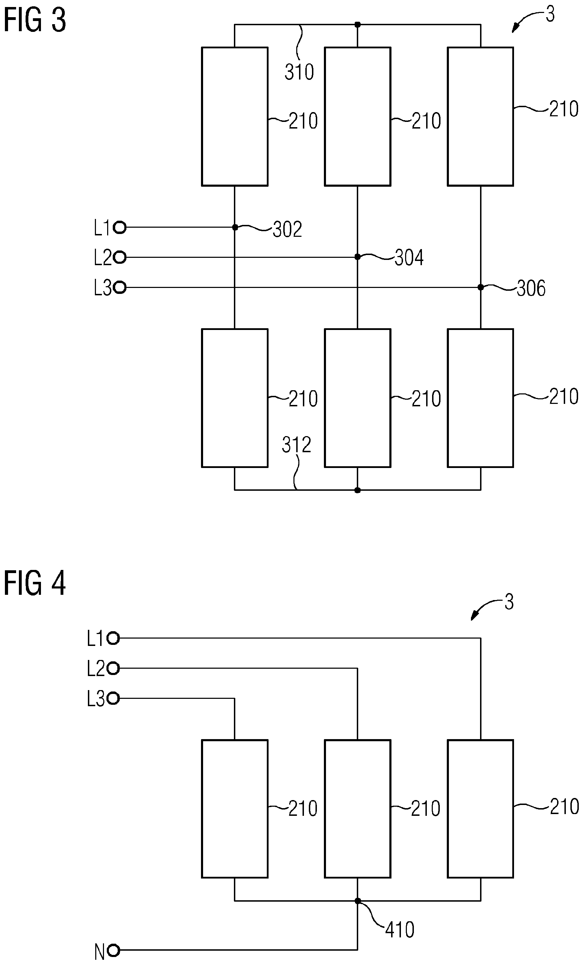

In Fig. 3 ist ein Ausführungsbeispiel eines Mehrstufenumrichters 3 dargestellt, welcher sechs Phasenmodule 210 aufweist. Diese sechs Phasenmodule 210 sind in einer Brückenschaltung (hier: in einer B6-Brückenschaltung) angeordnet. Dabei sind jeweils ein Anschluss eines ersten Phasenmoduls und ein Anschluss eines zweiten Phasenmoduls miteinander elektrisch verbunden und bilden einen Wechselspannungsanschluss 302, 304 oder 306.

Der andere Anschluss des ersten Phasenmoduls ist mit einem positiven Gleichspannungsanschluss 310 verbunden; der andere Anschluss des zweiten Phasenmoduls ist mit einem negativen Gleichspannungsanschluss 312 verbunden. Die drei Wechselspannungsanschlüsse 302, 304 und 306 sind mit drei Phasen L1, L2 und L3 des Wechselspannungs-Energieversorgungsnetzes 7 verbunden.

Fig. 4 zeigt ein Ausführungsbeispiel eines modularen Mehrstufenumrichters 3, bei dem drei Phasenmodule 210 in Sternschaltung geschaltet sind. Dabei sind jeweils ein Anschluss der drei Phasenmodule 210 miteinander elektrisch verbunden und bilden einen Sternpunkt 410. Der Sternpunkt 410 ist mit einem Rückleiter N des Energieversorgungsnetzes 7 verbunden. Die jeweils drei anderen Anschlüsse der Phasenmodule 210 sind jeweils mit einer Phase (L1, L2 oder L3) des Energieversorgungsnetzes 7 verbunden.

In Fig. 5 ist ein Ausführungsbeispiel eines einzelnen Phasenmoduls 210 dargestellt, welches einphasig an ein Energieversorgungsnetz angeschlossen werden kann. Dabei kann dieses Phasenmodul 210 zwischen einer Phase L und dem Rückleiter N des Energieversorgungsnetzes angeschlossen werden, wie in Fig. 5 dargestellt ist.

In Fig. 6 ist ein Ausführungsbeispiel des Phasenmoduls 210 näher dargestellt. Das Phasenmodul 210 weist einen ersten Anschluss 604 sowie einen zweiten Anschluss 606 auf. Der ersten Anschluss 604 ist über einen Stromsensor 608 mit einem ersten Sub-Modul 610 elektrisch verbunden. Das erste Sub-Modul 610 ist elektrisch in Reihe geschaltet mit weiteren Sub-Modulen 610; insgesamt weist das Phasenmodul 210 n Sub-Module 610 auf. Das letzte der n Sub-Module 610 ist über eine Koppelinduktivität 612 elektrisch mit dem zweiten Anschluss 606 verbunden. Mittels des Stromsensors 608 wird der durch das Phasenmodul 210 fließende Strom gemessen. Der erste Anschluss 604 und der zweite Anschluss 606 kann jeweils mit einer Phase des Wechselspannungs-Energieversorgungsnetzes 7 verbunden sein.

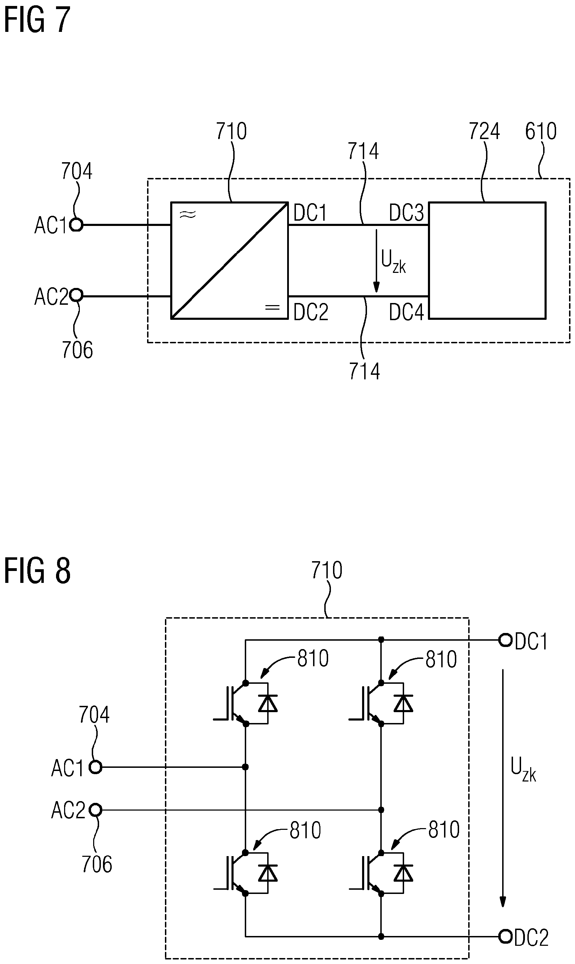

In Fig. 7 ist ein Ausführungsbeispiel des Sub-Moduls 610 im Detail dargestellt. Das zweipolige Sub-Modul 610 weist einen ersten Sub-Modulanschluss 704 und einen zweiten Sub-Modulanschluss 706 auf. Die beiden Sub-Modulanschlüsse 704 und 706 sind mit einer Leistungshalbleiterschaltung 710 verbunden (genauer gesagt mit einem Wechselspannungsanschluss der Leistungshalbleiterschaltung 710). Ein Gleichspannungsanschluss der Leistungshalbleiterschaltung 710 ist über einen Gleichspannungszwischenkreis 714 mit einem Energiespeicher 724 in Form eines Kondensatormoduls 724a verbunden. In dem Gleichspannungszwischenkreis 714 ist die Zwischenkreisspannung Uzk vorhanden. Die Leistungshalbleiterschaltung 710 wird auch als "Powermodul" bezeichnet.

In Fig. 8 ist ein Ausführungsbeispiel der Leistungshalbleiterschaltung 710 dargestellt. Die Leistungshalbleiterschaltung 710 weist vier Leistungshalbleiterschalter 810 auf, die ein- und ausschaltbar sind. Jeder der Leistungshalbleiterschalter 810 weist ein Leistungshalbleiterbauelement mit einer antiparallel geschalteten Diode auf. Im Ausführungsbeispiel der Fig. 8 ist das Leistungshalbleiterbauelement ein IGBT (Insulated Gate Bipolar Transistor). In anderen Ausführungsbeispielen kann das Halbleiterbauelement jedoch auch anders ausgestaltet sein, zum Beispiel als ein IGCT (Integrated Gate-Commutated Thyristor), IEGT (Injection-Enhanced Gate Transistor) oder als ein MOSFET (Metal-Oxide-Semiconductor Field-Effect Transistor). Die vier Halbleiterschalter 810 bilden im Ausführungsbeispiel der Fig. 8 eine Vollbrückenschaltung. Dadurch kann die Polarität der zwischen dem ersten Sub-Modulanschluss 704 und dem zweiten Sub-Modulanschluss 706 anliegenden Spannung umgekehrt werden.

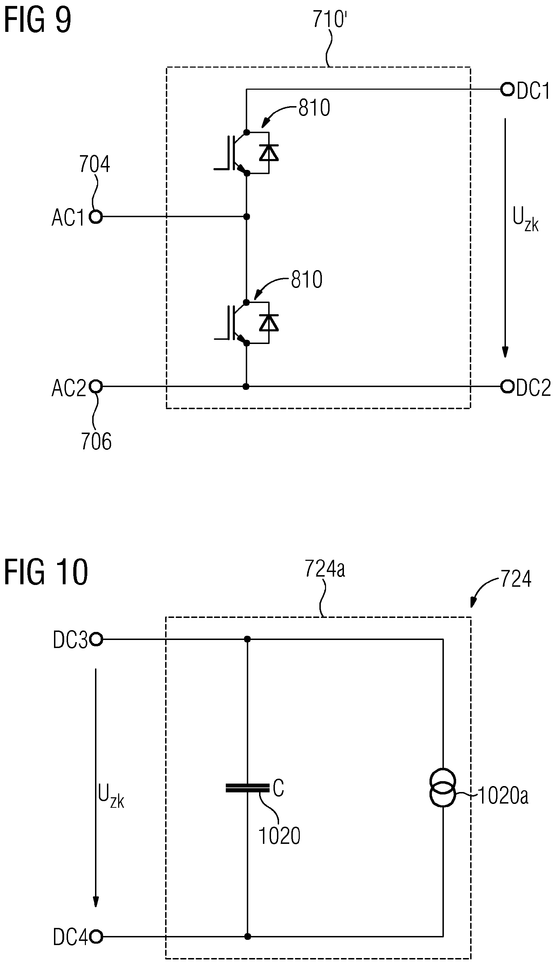

In Fig. 9 ist ein weitere Ausführungsbeispiel einer Leistungshalbleiterschaltung 710` dargestellt, welche lediglich zwei Leistungshalbleiterschalter 810 aufweist. Die beiden Leistungshalbleiterschalter 810 bilden im Ausführungsbeispiel der Fig. 9 eine Halbbrückenschaltung. Dadurch kann zwischen dem ersten Sub-Modulanschluss 704 und dem zweiten Sub-Modulanschluss 706 nur eine Spannung einer Polarität (oder eine Nullspannung) ausgegeben werden.

In Fig. 10 ist das Kondensatormodul 724a dargestellt, das hier aus einem Kondensator 1020 und einer parallelgeschalteten Spannungsmesseinrichtung 1020a besteht, wobei am Kondensator 1020 die Zwischenkreisspannung Uzk anliegt und von diesem gepuffert wird.

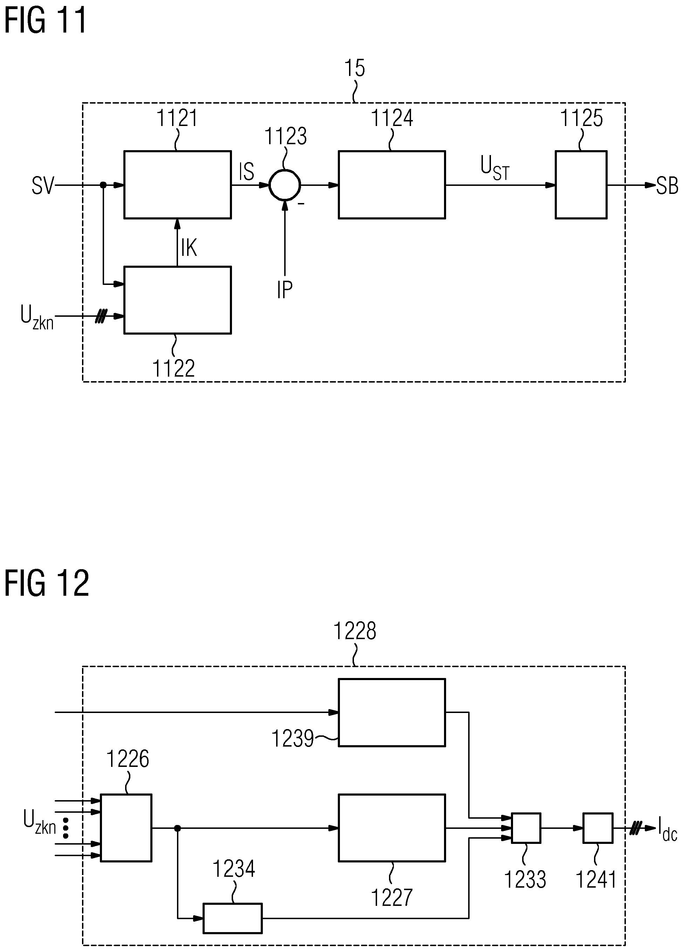

Dargestellt ist in Fig. 11 die Ansteuereinheit 15, welche einen Mikrokontroller, Signalprozessor, FPGA oder SPS aufweist. Die Ansteuereinheit 15 verfügt über eine Sollwertgenerierung 1121 und eine Gleichstromkorrektur 1122, denen der Wirk- oder Blindleistungssollwert SV zugeführt wird. Die Gleichstromkorrektur 1122 berechnet anhand des Wirk- oder Blindleistungssollwerts SV und der n Zwischenkreisspannungen Uzkn der Phasenmodule 210 für jedes Phasenmodul 210 eine Stromkorrektur IK bei Vorhandensein eines Gleichstromanteils, d.h. einer Gleichstromabgabe die ebenfalls der Sollwertgenerierung 1121 zugeführt werden. Die Sollwertgenerierung 1121 gibt für jedes Phasenmodul 210 einen Sollstrom IS aus, der mit dem vom Stromsensor 608 gemessenen Phasenmodulstrom IP des zugehörigen Phasenmoduls 210 in einer Vergleichseinrichtung 1123 verglichen wird. Die Differenz des ausgegebenen Sollstroms IS und des gemessenen Phasenmodulstroms IP, die dem Regelfehler entspricht, wird einem Stromregler 1124, z.B. in Form eines PI-Reglers, zugeführt, der für jedes Phasenmodul 210 eine Stellspannung UST berechnet und an eine Pulsmustergenerierung 1125 ausgibt. Die Pulsmustergenerierung 1125 erzeugt entsprechende Schaltbefehle SB für die einzelnen Sub-Module 610 der Phasenmodule 210.

In Fig. 12 ist eine erste Ausführung einer Gleichstromabgabe-Ermittlung 1228 (Gleichstromschätzung) dargestellt, in der aus allen Zwischenkreisspannungen Uzkn der n Sub-Module 610 innerhalb eines Phasenmoduls 210 der momentane Mittelwert mittels eines Filters 1226 berechnet wird. Der berechnete momentane Mittelwert wird anschließend einem Amplitudenfilter 1227 für die Spannungswelligkeit zugeführt, an dessen Ausgang der Wechselanteil zur Verfügung steht. Parallel dazu wird der am Amplitudenfilter 1227 abgegriffene Gleichanteil des momentanen Mittelwerts ebenfalls einem Multiplizierer 1233 zugeführt. Das Ergebnis wird mit der in einem Phasenmodulspannungs-Amplitudenfilter 1239 berechneten Amplitude der Phasenmodulspannung UP und der gefilterten mittleren Modulspannung (Gleichanteil und Wechselanteil) in einem Multiplizierer 1233 miteinander und anschließend in einem Skalierer 1241 mit einem Verstärkungsfaktor -2Pi x f x C/n multipliziert (f: Netzfrequenz, C: Kapazität von Kondensator 1020 und n: Anzahl der Sub-Module 610 pro Phasenmodul 210). Am Ausgang des Skalierers 1241 stehen die Gleichstromabgaben Idc der drei Phasenmodule 210 zur Verfügung.

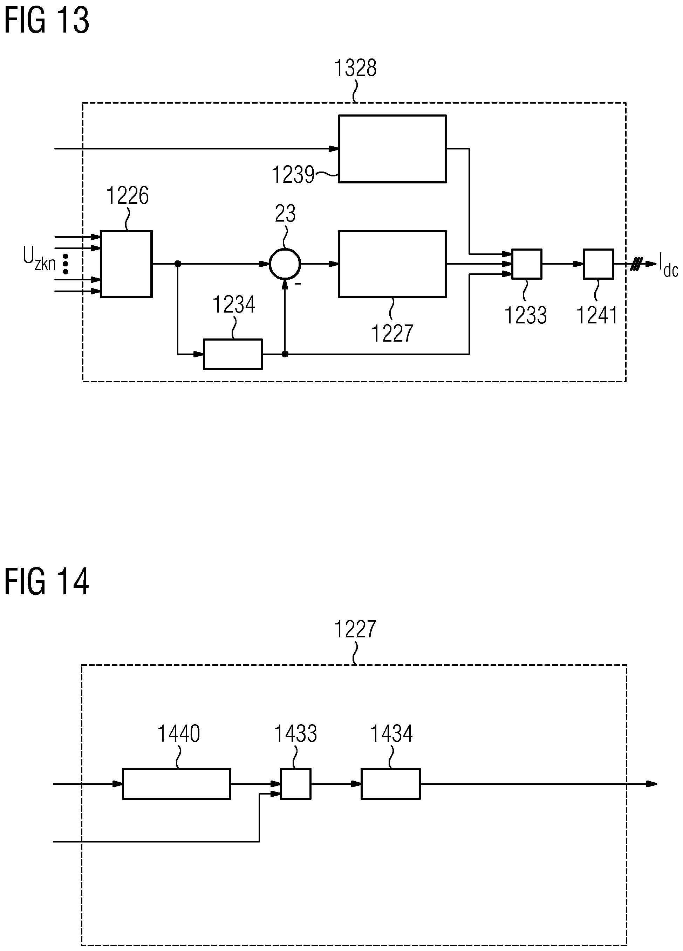

In Fig. 13 ist eine zweite Ausführung einer Gleichstromabgabe-Ermittlung 1328 (Gleichstromschätzung) dargestellt, in der wie in Fig. 12 aus allen Zwischenkreisspannungen Uzkn der n Sub-Module 610 innerhalb eines Phasenmoduls 210 der momentane Mittelwert wieder mittels eines Filters 1226 berechnet wird. Hiervon wird in einem Subtrahierer 1323 die gefilterte Modulspannung abgezogen und die Differenz einem Amplitudenfilter 1227 für die Spannungswelligkeit zugeführt. Das Ergebnis wird mit der Amplitude der Phasenmodulspannung UP und der gefilterten Modulspannung mittels eines Multiplizierers 1233 multipliziert, wobei die Amplitude der Phasenmodulspannung UP in dem Phasenmodulspannungs-Amplitudenfilter 1239 berechnet wird. Das Resultat wird in einem Skalierer 1241 mit einem Verstärkungsfaktor -2Pi x f x C/n skaliert f: Netzfrequenz, C: Kapazität von 20 und n: Anzahl Sub-Module 610 pro Phasenmodul 10. Am Ausgang des Skalierers 1241 stehen wieder die Gleichstromabgaben Idc der drei Phasenmodule 10, also der vorzeichenrichtige Gleichstrom, zur Verfügung.

In Fig. 14 ist eine beispielhafte Ausführung des Amplitudenfilters 1227 dargestellt. Der Mittelwert aus dem Filter 1226 wird mit der im Drehglied 1440 um 90° phasenverschobenen Anschlussspannung 21 mittels eines Multiplizierers 1433 multipliziert. Das Ergebnis der Multiplikationen wird mit einem (gleitenden) Mittelwertbildner 1434 gefiltert, was alternativ auch mit einem Tiefpass oder mehreren Bandsperren erfolgen kann.

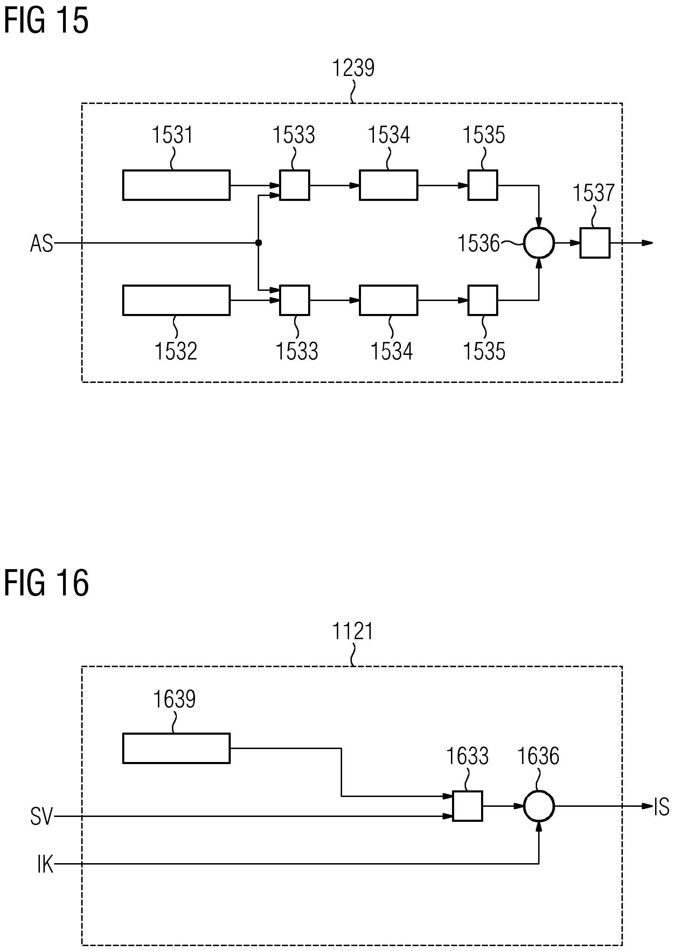

In Fig. 15 ist eine beispielhafte Ausführung des Phasenmodulspannungs-Amplitudenfilters 1239 dargestellt, das die netzfrequente Fourieramplitude berechnet. Die gemessene oder rückgerechnete Phasenmodulanschlussspannung AS, welche über allen Sub-Modulen 610 eines Phasenmoduls 210 und ohne die Koppelinduktivität 612 anliegt, wird jeweils mit einem Sinussignal 1531 und einem Cosinussignal 1532 der Frequenz der Netzspannung (hier von 50 Hz) in einem Multiplizierer 1533 multipliziert. Das Ergebnis der Multiplikationen wird in einem Filter 1534 gefiltert, beispielsweise bevorzugt mit einem gleitenden Mittelwertbildner, oder aber alternativ einem Tiefpass oder mehreren Bandsperren. Die gefilterten Signale werden in einem Quadrierer 1535 quadriert und in einem Addierer 1536 summiert. Aus der Summe wird in einem Wurzelberechner 1537 die Wurzel gezogen.

In Fig. 16 ist die Sollwertgenerierung 1121 dargestellt. Der Wirk- oder Blindleistungssollwert SV wird mit dem Ausgang eines Sinusgenerators 1639 in einem Multiplizierer 1633 multipliziert. Der Sinusgenerator 1639 erzeugt ein netzfrequentes Signal, das in Phase mit der Anschlussspannung 21 ist. Das Multiplikationsergebnis wird mit dem Gleichstromstellsignal IK der Gleichstromkorrektur 1122 in einem Addierer 1636 addiert.

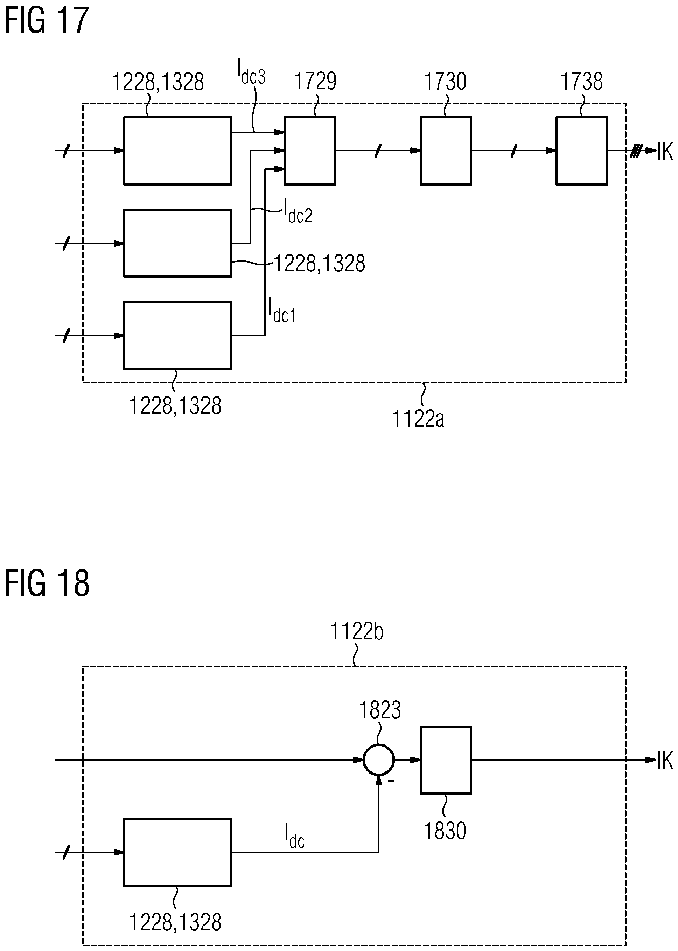

In Fig. 17 ist die Gleichstromkorrektur 1122 in einer ersten Ausführung 1122a dargestellt. Zuerst wird für alle drei Phasenmodule 210 die Gleichstromabgabe-Ermittlung 1228 oder 1328 durchgeführt. Die drei Gleichstromabgaben Idc (Idc1, Idc2 Idc3 für die drei Phasenmodule 210) werden dem Abweichungsberechner 1729 zugeführt, der von den ersten zwei Amplituden den Mittelwert über die drei Eingangswerte abzieht und das Vorzeichen umkehrt. Die zwei erhaltenen Abweichungen werden jeweils einem Abweichungsregler 1730 zugeführt, welche ein erforderliches Gleichstromstellsignal in Form einer Stromkorrektur IK ausgeben. Der Abweichungsregler 1730 kann beispielsweise aus einem P- oder PI-Regler bestehen. Aus den zwei Stellsignalen der Abweichungsregler 1730 wird in dem Gleichstromstellsignalgeber 1738 das dritte Gleichstromstellsignal durch Summierung und Vorzeichenumkehr der beiden anderen Stellsignale gebildet.

In Fig. 18 ist die Gleichstromkorrektur 1122 in einer zweiten Ausführung 1122b dargestellt. Für jede Amplitude wird ein Soll-Istwert-Vergleich 1823 durchgeführt und der Regelfehler einem Abweichungsregler 1830 zugeführt, welche ein Gleichstromstellsignal in Form einer Stromkorrektur IK ausgeben. Der Abweichungsregler 1830 kann beispielhaft auf einem P- oder PI-Regler bestehen.

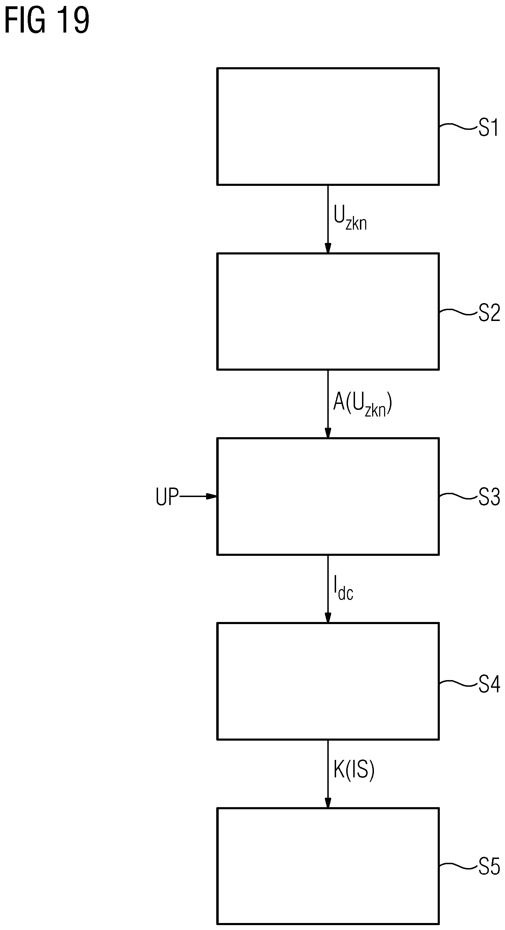

Fig. 19 zeigt das Verfahren zum Betrieb des Mehrstufenumrichters 3 in einem Ablaufdiagramm mit den Schritten S1 - S5:
S1 - Messung der Zwischenkreisspannungen Uzkn der Sub-Module 610 für jedes Phasenmodul 210,
S2 - Ermittlung der Amplituden A des netzfrequenten Wechselanteils der Zwischenkreisspannungen Uzkn der Sub-Module 610 für jedes Phasenmodul 210 und
S3 - Ermittlung der Gleichstromabgaben Idc der Phasenmodule 210 anhand der zu jedem Phasenmodul 210 gehörigen Amplituden der netzfrequenten Wechselanteile und der Phasenmodulspannung UP, und
S4 - Korrektur K der zu den Phasenmodulen 210 gehörigen Sollströme IS anhand der ermittelten Gleichstromabgaben Idc der Phasenmodule 210 und
S5 - Ausregeln der Gleichstromabgaben Idc für alle Phasenmodule 210 auf das gleiche Stromniveau.

## Patentansprüche

1. Verfahren zum Betrieb eines mehrphasigen Mehrstufenumrichters (3), der über einen Transformator (5a) an eine Energieversorgung (7) angeschlossen ist und mehrere Phasenmodule (210) aufweist, die jeweils aus einer Vielzahl von elektrisch in Reihe geschalteten zweipoligen Sub-Modulen (610) gebildet sind, welche jeweils mehrere Halbleiterschalter (710, 710`) und jeweils einen Energiespeicher (724) aufweisen, an dem eine Zwischenkreisspannung (Uzkn) anliegt,
wobei für jedes Phasenmodul (210) der Phasenmodulstrom (IP) anhand eines vorgegebenen Sollstroms (IS) geregelt wird,
**dadurch gekennzeichnet,**
**dass** für jedes Phasenmodul (210)
a) die Zwischenkreisspannungen (Uzkn) der Sub-Module (610) gemessen werden,
b) die Amplituden des netzfrequenten Wechselanteils der Zwischenkreisspannungen (Uzkn) der Sub-Module (610) ermittelt werden und
c) anhand der Amplituden der netzfrequenten Wechselanteile und der zu dem Phasenmodul (210) gehörigen Phasenmodulspannung (UP) die Gleichstromabgabe (Idc) des Phasenmoduls (210) ermittelt wird, und
**dass** anhand der ermittelten Gleichstromabgaben (Idc) der Phasenmodule (210) die zugehörigen Sollströme (IS) derart korrigiert werden, dass die Gleichstromabgaben (Idc) für alle Phasenmodule (210) auf das gleiche Stromniveau ausgeregelt werden, so dass keine Gleichstromanteil-Differenz in den Transformator fließen kann,
wobei für jedes Phasenmodul (210)
a) der Phasenmodulstrom (IP) gemessen wird,
b) der Sollstrom (IS) anhand eines vorgegebenen Wirkleistungs- oder Blindleistungssollwerts (SV) ermittelt wird,
c) der ausgegebene Sollstrom (IS) mit dem gemessenen Phasenmodulstrom (IP) verglichen wird,
d) eine Stellspannung (UST) anhand der Differenz, die dem Regelfehler entspricht, berechnet und ausgegeben wird, und für jedes Phasenmodul (210) anhand der Stellspannung (UST) eine Pulsmusterspannung erzeugt wird und anhand der Pulsmusterspannung die Schaltbefehle (SB) für die einzelnen Sub-Module (610) generiert werden.

## Claims

1. Method for operating a multi-phase multi-level converter (3) that is connected to an energy supply (7) via a transformer (5a) and has a plurality of phase modules (210) that are each formed from a multiplicity of electrically series-connected two-pole submodules (610) that each have a plurality of semiconductor switches (710, 710') and in each case one energy store (724) at which an intermediate circuit voltage (Uzkn) is present,
wherein, for each phase module (210), the phase module current (IP) is regulated on the basis of a predefined setpoint current (IS), **characterized**
**in that**, for each phase module (210),
a) the intermediate circuit voltages (Uzkn) of the submodules (610) are measured,
b) the amplitudes of the system-frequency AC component of the intermediate circuit voltages (Uzkn) of the submodules (610) are determined and
c) the DC output (Idc) of the phase module (210) is determined on the basis of the amplitudes of the system-frequency AC components and the phase module voltage (UP) associated with the phase module (210), and
**in that** the associated setpoint currents (IS) are corrected on the basis of the determined DC outputs (Idc) of the phase modules (210) such that the DC outputs (Idc) for all phase modules (210) are adjusted to the same current level, such that no DC component difference is able to enter the transformer,
wherein, for each phase module (210),
a) the phase module current (IP) is measured,
b) the setpoint current (IS) is determined on the basis of a predefined active-power or reactive-power setpoint value (SV),
c) the output setpoint current (IS) is compared with the measured phase module current (IP),
d) an actuating voltage (UST) is calculated on the basis of the difference corresponding to the control error and is output, and a pulse pattern voltage is generated for each phase module (210) on the basis of the actuating voltage (UST), and the switching commands (SB) for the individual submodules (610) are generated on the basis of the pulse pattern voltage.

## Revendications

1. Procédé pour faire fonctionner un convertisseur (3) polyphasé à plusieurs étages, qui est connecté à une alimentation (7) en énergie par un transformateur (5a) et qui a plusieurs modules (210) de phase, qui sont formés chacun d'une pluralité de sous-modules (610) bipolaires montés électriquement en série, lesquels ont chacun plusieurs interrupteurs (710, 710') à semiconducteur et chacun un accumulateur (724) d'énergie, auquel s'applique une tension (Uzkn) de circuit intermédiaire,
dans lequel, pour chaque phase (210) de module, on régule le courant (IP) de module de phase à l'aide d'un courant (IS) de consigne donné à l'avance,
**caractérisé**
**en ce que**, pour chaque module (210) de phase,
a) on mesure les tensions (Uzkn) de circuit intermédiaire des sous-modules (610),
b) on détermine les amplitudes de la composante alternative à la fréquence du réseau des tensions (Uzkn) de circuit intermédiaire des sous-modules (610), et
c) à l'aide des amplitudes des composantes alternatives à la fréquence du réseau et de la tension (UP) de module de phase appartenant au module (210) de phase, on détermine le débit (Idc) de courant continu du module (210) de phase, et
d) **en ce que**, à l'aide des débits (Idc) déterminés de courant continu des modules (210) de phase, on corrige les courants (IS) de consigne leur appartenant, de manière à régler les débits (Idc) de courant continu au même niveau de courant pour tous les modules (210) de phase, de sorte qu'une différence de composante de courant continu ne puisse pas passer dans le transformateur,
dans lequel, pour chaque module (210) de phase,
a) on mesure le courant (IP) de module de phase,
b) on détermine le courant (IS) de consigne, à l'aide d'une valeur (SV) de consigne de puissance active ou de puissance réactive,
c) on compare le courant (IS) de consigne sorti au courant (IP) de module de phase mesuré,
d) on calcule et on sort une tension (UST) de réglage, à l'aide de la différence, qui correspond à l'erreur de régulation, et pour chaque module (210) de phase, on produit, à l'aide de la tension (UST) de réglage, une tension de modèle d'impulsion et, à l'aide de la tension de modèle d'impulsion, on génère des instructions (SB) de commutation pour les divers sous-modules (610) .
